(19) 

**Europäisches Patentamt**

**European Patent Office**

**Office européen des brevets**

(11) **EP 4 664 390 A1**

(12) **EUROPEAN PATENT APPLICATION**

(43) Date of publication:
**17.12.2025 Bulletin 2025/51**

(21) Application number: **25181800.1**

(22) Date of filing: **10.06.2025**

(51) International Patent Classification (IPC):
**G06T 1/20** *(2006.01)* **G06T 3/4038** *(2024.01)*

(52) Cooperative Patent Classification (CPC):
**G06T 1/20; G06T 3/4038**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **11.06.2024 KR 20240075634**
**14.08.2024 KR 20240109447**

(71) Applicant: **Nextchip Co., Ltd.**
**Seongnam-si, Gyeonggi-do 13494 (KR)**

(72) Inventor: **CHON, Woo E**
**08735 Seoul (KR)**

(74) Representative: **Gill Jennings & Every LLP**
**The Broadgate Tower**
**20 Primrose Street**
**London EC2A 2ES (GB)**

(54) **METHOD OF PROCESSING IMAGE SIGNAL AND IMAGE PROCESSING DEVICE FOR PERFORMING THE SAME**

(57)    A method, performed by an image processing device, of processing an image signal is provided. The method includes receiving, by a split circuit, a first raw image signal, which is at least a portion of an image signal captured by an image sensor of a first camera, determining, by the split circuit, a blending region for the first raw image signal, transmitting, from the split circuit, a first partial raw image signal of the first raw image signal corresponding to a first region including the blending region to a first image signal processor (ISP), and transmitting, from the split circuit, a second partial raw image signal of the first raw image signal corresponding to a second region including the blending region to a second ISP. The first partial raw image signal is processed by the first ISP, and the second partial raw image signal is processed by the second ISP.

```
                        Start
                          |
                          v
  Receive first raw image signal, which is at least portion of    — 310
  image signal captured by image sensor of first camera
                          |
                          v
  Determine blending region for first raw image signal            — 320
              |                             |
              v — 330                        v — 340
  Transmit, to first ISP, first    Transmit, to second ISP, second
  partial raw image signal of      partial raw image signal of first raw
  first raw image signal           image signal corresponding to second
  corresponding to first region    region including blending region
  including blending region
              |                             |
              +-------------+---------------+
                            v
                          End
```

**FIG. 3**

EP 4 664 390 A1

## Description

CROSS-REFERENCE TO RELATED APPLICATION

This application claims the benefit of Korean Patent Application No. 10-2024-0075634 filed on June 11, 2024, and Korean Patent Application No. 10-2024-0109447 filed on August 14, 2024, in the Korean Intellectual Property Office, the entire disclosure of which is incorporated herein by reference for all purposes.

BACKGROUND

1. Field of the Invention

The following embodiments relate to a method of processing an image signal, and more particularly, to a method of processing a raw image signal by using a plurality of image signal processors.

2. Description of the Related Art

An image signal processor (ISP) generates an image by receiving a raw image signal captured by an image sensor of a camera and processing the raw image signal. The image generated by the ISP may be output on a display or may be used for an additional function. For example, an image generated based on a raw image signal obtained by a camera mounted on a vehicle may be transmitted to an engine control unit (ECU) or vehicle control unit (VCU) of the vehicle and may be used for an advanced driver assistance system (ADAS).

When an image processing device needs to process a large amount of image signals in real time, the image processing device may include a plurality of ISPs. When the image processing device includes a plurality of ISPs and setting values of the ISPs used for image generation are different from each other, the consistency among images generated by the ISPs may decrease.

SUMMARY

An embodiment may provide a method of transmitting at least a portion of a raw image signal to a plurality of image signal processors (ISPs) of an image processing device.

An embodiment may provide a method of transmitting at least a portion of a raw image signal to a plurality of ISPs of an image processing device such that at least a portion of an image signal transmitted to the plurality of ISPs includes an overlapping region.

However, the technical aspects are not limited to the aforementioned aspects, and other technical aspects may be present.

According to an embodiment, a method, performed by an image processing device, of processing an image signal, includes receiving, by a split circuit, a first raw image signal, which is at least a portion of an image signal captured by an image sensor of a first camera, determining, by the split circuit, a blending region for the first raw image signal, transmitting, from the split circuit, a first partial raw image signal of the first raw image signal corresponding to a first region including the blending region to a first ISP, and transmitting, from the split circuit, a second partial raw image signal of the first raw image signal corresponding to a second region including the blending region to a second ISP, wherein the first partial raw image signal is processed by the first ISP, and the second partial raw image signal is processed by the second ISP.

The determining of the blending region for the first raw image signal includes obtaining a plurality of first register values for the first ISP, obtaining a plurality of second register values for the second ISP, determining a number of register values showing a difference by comparing the plurality of first register values with the plurality of second register values, and determining a size of the blending region based on the number of register values showing the difference.

The determining of the blending region for the first raw image signal includes obtaining a first register value for the first ISP, obtaining a second register value for the second ISP, and determining a size of the blending region based on the first register value and the second register value.

The determining of the size of the blending region based on the first register value and the second register value includes calculating a difference between the first register value and the second register value, and determining the size of the blending region based on the difference.

The determining of the blending region for the first raw image signal includes obtaining a pixel value difference between a value of a first pixel of a first previous partial image corresponding to a first previous partial raw image signal processed by the first ISP and a value of a second pixel of a second previous partial image corresponding to a second previous partial raw image signal processed by the second ISP, and determining the size of the blending region based on the pixel value difference between the first pixel and the second pixel.

The transmitting of the first partial raw image signal of the first raw image signal corresponding to the first region including the blending region to the first ISP includes obtaining a first horizontal synchronization signal generated to correspond to the first region, generating the first partial raw image signal corresponding to the first region based on the first horizontal synchronization signal, and transmitting the first partial raw image signal to the first ISP.

A size of the blending region for the first raw image signal is different from a size of a previous blending region for a previous raw image signal.

The method further includes generating a first partial image by processing the first partial raw image signal by the first ISP, and generating a second partial image by processing the second partial raw image signal by the second ISP.

The method further includes obtaining, by a merge circuit, the first partial image and the second partial image, and generating, by the merge circuit, a first image corresponding to the first raw image signal based on the first partial image and the second partial image.

The generating, by the merge circuit, of the first image corresponding to the first raw image signal includes obtaining values of third pixels corresponding to the blending region in the first image by a weighted sum of values of first pixels corresponding to the blending region in the first partial image and values of second pixels corresponding to the blending region in the second partial image.

The generating, by the merge circuit, of the first image corresponding to the first raw image signal further includes excluding pixels corresponding to a first boundary region in the blending region from the blending region in the first partial image, and excluding pixels corresponding to a second boundary region in the blending region from the blending region in the second partial image.

According to an embodiment, an image processing device includes a split circuit configured to receive a first raw image signal, which is at least a portion of an image signal captured by an image sensor of a first camera, a first ISP configured to generate a first partial image by processing a first partial raw image signal of the first raw image signal, and a second ISP configured to generate a second partial image by processing a second partial raw image signal of the first raw image signal, wherein the split circuit is further configured to determine a blending region for the first raw image signal, transmit, to the first ISP, the first partial raw image signal of the first raw image signal corresponding to a first region including the blending region, and transmit, to the second ISP, the second partial raw image signal of the first raw image signal corresponding to a second region including the blending region.

The first ISP is further configured to detect a setting signal in a section corresponding to a first frame and generate the first partial image corresponding to the setting signal in a section corresponding to a second frame, and the second ISP is further configured to detect the setting signal in the section corresponding to the first frame and generate the second partial image corresponding to the setting signal in the section corresponding to the second frame.

The split circuit is further configured to bypass each sample included in at least one of a plurality of lines included in the first raw image signal through at least one of the first ISP or the second ISP, based on a received horizontal synchronization signal.

The image processing device further includes a merge circuit configured to generate a first image corresponding to the first raw image signal based on the first partial image and the second partial image.

The merge circuit is further configured to store a first line of the first partial image and a second line of the second partial image by using a line buffer, and generate a third line of the first image based on the first line and the second line.

The merge circuit is further configured to obtain values of third pixels of the third line by a weighted sum of values of first pixels of the first line and values of second pixels of the second line.

The image processing device further includes a third ISP configured to generate a third partial image by processing a third partial raw image signal, wherein the split circuit is further configured to transmit, to the third ISP, the third partial raw image signal of the first raw image signal corresponding to a third region including at least a portion of the blending region.

According to an embodiment, an image processing device includes a split circuit configured to receive a first raw image signal, which is at least a portion of an image signal captured by an image sensor of a first camera, determine a blending region for the first raw image signal, transmit, to a first ISP, a first partial raw image signal of the first raw image signal corresponding to a first region including the blending region, and transmit, to a second ISP, a second partial raw image signal of the first raw image signal corresponding to a second region including the blending region, the first ISP configured to generate a first partial image by processing the first partial raw image signal, the second ISP configured to generate a second partial image by processing the second partial raw image signal, and a merge circuit configured to generate a first image corresponding to the first raw image signal based on the first partial image and the second partial image.

According to at least one of embodiments of the present disclosure, an image processing device including a plurality of ISPs for processing at least a portion of a raw image signal in real time may be provided.

According to at least one of embodiments of the present disclosure, a method of generating a natural image by ensuring that at least a portion of an image signal transmitted to a plurality of ISPs of an image processing device includes an overlapping region may be provided.

## BRIEF DESCRIPTION OF THE DRAWINGS

These and/or other aspects, features, and advantages of the invention will become apparent and more readily appreciated from the following description of embodiments, taken in conjunction with the accompanying drawings of which:

    FIG. 1 is a diagram of a configuration of an image signal processing system, according to an embodiment;

FIG. 2 is a diagram of a configuration of an image processing device, according to an embodiment;

FIG. 3 is a flowchart of an image signal processing method, according to an embodiment;

FIG. 4 illustrates operations of a split circuit, according to an embodiment;

FIG. 5 is a flowchart of an image signal processing method for determining a size of a blending region based on the number of register values having differences between a first image signal processor (ISP) and a second ISP, according to an embodiment;

FIG. 6 is a flowchart of an image signal processing method for determining a size of a blending region based on a first register value of a first ISP and a second register value of a second ISP, according to an embodiment;

FIG. 7 is a flowchart of an image signal processing method for determining a size of a blending region based on a difference between a first pixel value of a first previous partial image and a second pixel value of a second previous partial image, according to an embodiment;

FIG. 8 is a flowchart of an image signal processing method for generating a first partial raw image signal based on a first horizontal synchronization signal, according to an embodiment;

FIG. 9 illustrates a first horizontal synchronization signal and a second horizontal synchronization signal, according to an embodiment;

FIG. 10 is a flowchart of an image signal processing method for generating a first image based on a first partial image and a second partial image, according to an embodiment;

FIG. 11 illustrates operations of a first ISP and a second ISP, according to an embodiment;

FIG. 12 is a flowchart of a method of obtaining values of pixels corresponding to a blending region in a first image, according to an embodiment;

FIG. 13 illustrates operations of a merge circuit, according to an embodiment;

FIG. 14 illustrates a vertical synchronization signal and a setting signal transmission section, according to an embodiment; and

FIG. 15 illustrates a transformed horizontal synchronization signal and a first transformed raw image signal, according to an embodiment.

## DETAILED DESCRIPTION

Hereinafter, embodiments are described in detail with reference to the accompanying drawings. However, various alterations and modifications may be made to the embodiments. Here, the embodiments are not meant to be limited by the descriptions of the present disclosure. The embodiments should be understood to include all changes, equivalents, and replacements within the idea and the technical scope of the disclosure.

The terminology used herein is for the purpose of describing particular embodiments only and is not to be limiting of the embodiments. As used herein, the singular forms "a," "an," and "the" are intended to include the plural forms as well, unless the context clearly indicates otherwise. It should be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical and scientific terms used herein have the same meaning as commonly understood by one of ordinary skill in the art to which example embodiments belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

When describing the embodiments with reference to the accompanying drawings, like reference numerals refer to like constituent elements and a repeated description related thereto will be omitted. In the description of embodiments, detailed description of well-known related technology will be omitted when it is deemed that such description will cause ambiguous interpretation of the present disclosure.

Also, in the description of the components, terms such as first, second, A, B, (a), (b) or the like may be used herein when describing components of the present disclosure. These terms are used only for the purpose of discriminating one constituent element from another constituent element, and the nature, the sequences, or the orders of the constituent elements are not limited by the terms. It should be noted that if one component is described as being "connected," "coupled" or "joined" to another component, the former may be directly "connected," "coupled," and "joined" to the latter or "connected", "coupled", and "joined" to the latter via another component.

The same name may be used to describe an element included in the embodiments described above and an element having a common function. Unless otherwise mentioned, the description of one embodiment may be applicable to other embodiments. Thus, duplicated description is omitted for conciseness.

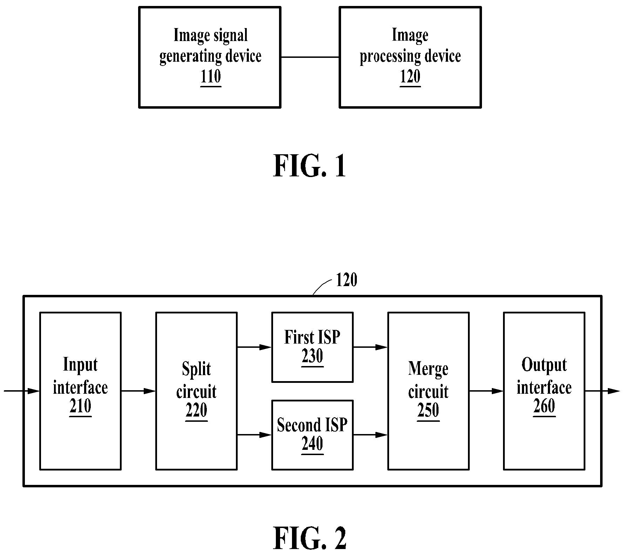

FIG. 1 is a diagram of a configuration of an image signal processing system, according to an embodiment.

An image signal processing system according to an embodiment may include an image signal generating device 110 and an image processing device 120.

The image signal generating device 110 may generate a raw image signal by an image sensor for obtaining information about an external environment. For example, the image signal generating device 110 may include a camera and may generate a raw image signal from a signal captured by an image sensor of the camera.

The image sensor of the image signal generating device 110 may receive light from the outside and generate an analog signal for the light received from the outside by separating colors of the received light through a color filter array (CFA) and detecting the intensity of the light for the separated colors via a plurality of photodiodes. For example, a pattern of the CFA included in the image signal generating device 110 may be a Bayer pattern, a red-green-blue-infrared (RGBIR) pattern, a red-clear-clear-blue (RCCB) pattern, or a red-yellow-yellow-cyan (RYYCy) pattern.

According to an embodiment, the image signal generating device 110 may transmit, to the image processing device 120, the analog signal for the light received from the outside as the raw image signal. The raw image signal may include analog signals of a plurality of lines (e.g., horizontal lines) corresponding to a photodiode array of the image sensor.

The image signal generating device 110 may transmit the raw image signal, which is the analog signal, to the image processing device 120 through a coaxial cable. When using the coaxial cable for transmitting the signal, a large volume of data may be transmitted by using high bandwidth, and signal interference may be minimized.

According to an embodiment, the image signal generating device 110 may include a plurality of cameras. For example, image sensors respectively included in the plurality of cameras may include CFA patterns that are different from each other. As the same scene is captured by the cameras having different CFA patterns, visual information required for a specific situation may be smoothly obtained. For example, in a dark situation, an image generated by a first CFA pattern based on IR may be used to detect an object rather than an image generated by the first CFA pattern based on RGB.

According to an embodiment, the image signal processing system may include a plurality of image signal generating devices 110. For example, the first image signal generating device may be connected to the image processing device 120 through a first coaxial cable, and the second image signal generating device may be connected to the image processing device 120 through a second coaxial cable. Each of the plurality of image signal generating devices may generate a raw image signal and may transmit the generated raw image signal to the image processing device 120.

The method of generating an image by the image processing device 120 is further described below with reference to FIGS. 2 to 15.

FIG. 2 is a diagram of a configuration of an image processing device, according to an embodiment.

The image processing device 120 according to an embodiment may include an input interface 210, a split circuit 220, a first image signal processor (ISP) 230, a second ISP 240, a merge circuit 250, and an output interface 260.

The input interface 210 may be connected to other external devices to transmit and receive data. Hereinafter, the expression "transmit and receive "A"" may refer to transmit and receive "information or data indicating A".

The input interface 210 may be implemented as circuitry in the image processing device 120. For example, the input interface 210 may include an internal bus and an external bus. In another example, the input interface 210 may be a component for connecting the image processing device 120 to an external device. The input interface 210 may be connected to the image signal generating device 110 through a coaxial cable. The input interface 210 may receive data from the external device and may transmit the data to the split circuit 220, the first ISP 230, the second ISP 240, the merge circuit 250, and the output interface 260.

The input interface 210 may transmit a raw image signal received from the image signal generating device 110 to the split circuit 220.

The arrows shown in FIG. 2 show a portion of the flow of signal processing performed by the image processing device 120, and the connection between components of the image processing device 120 or the flow of signal processing are not limited to the arrows shown in FIG. 2. For example, the input interface 210 may be connected to the first ISP 230 and may bypass the split circuit 220.

When the image processing device 120 needs to process a large amount of raw image signals in real time, the image processing device 120 may simultaneously use the first ISP 230 and the second ISP 240 to process the raw image signals. When the image processing device 120 includes the first ISP 230 and the second ISP 240, the split circuit 220 may be used to distinguish partial raw image signals to be processed by each of the first ISP 230 and the second ISP 240.

The split circuit 220 may generate a first partial raw image signal and a second partial raw image signal based on a received first raw image signal. The first raw image signal may be a signal that the split circuit 220 may receive through one operation clock input to the split circuit 220.

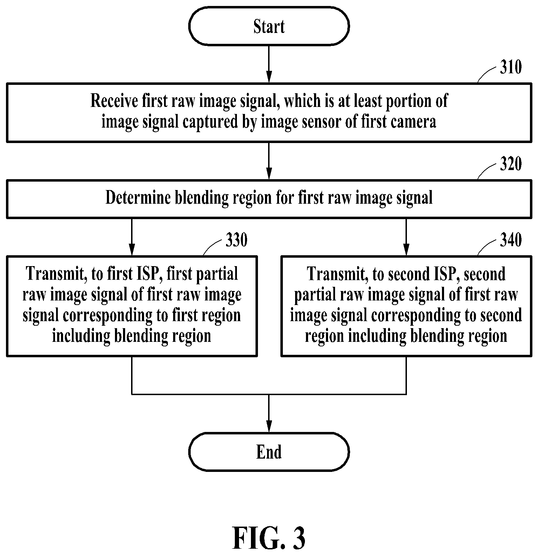

According to an embodiment, of the raw image signal, the first raw image signal may be an image signal having a capacity that the split circuit 220 may temporarily store. For example, when the split circuit 220 includes a line buffer, the first raw image signal may be at least a portion of the raw image signal corresponding to the size of the line buffer of the split circuit 220. The method of generating the first partial raw image signal and the second partial raw image by the split circuit 220 is further described below with reference to FIGS. 3. to 9.

Each of the first ISP 230 and the second ISP 240 may be an ISP and may process data (e.g., a partial raw image signal) received from the split circuit 220 and data stored in memory. A "processor" may be a data processing device implemented by hardware including a circuit having a physical structure to perform desired operations. For example, the desired operations may include code or instructions in a program. For example, the data processing device implemented by hardware may include a microprocessor, a central processing unit (CPU), a processor core, a multi-core processor, a multiprocessor, an application-specific integrated circuit (ASIC), and a field-programmable gate array (FPGA).

Each of the first ISP 230 and the second ISP 240 may execute computer-readable code (e.g., software) stored in the memory and instructions triggered by one of processors included in the image processing device 120.

Each of the first ISP 230 and the second ISP 240 may generate an image by processing the raw image signal or the partial raw image signal. For example, each of the first ISP 230 and the second ISP 240 may generate an image having a color space of RGB or YUV by processing the raw image signal. The first ISP 230 may generate a first partial image by processing a first partial raw image signal. The second ISP 240 may generate a second partial image by generating a second partial raw image signal.

According to an embodiment, each of the first ISP 230 and the second ISP 240 may process a raw image signal generated by respective image sensors including different CFA patterns. When the first ISP 230 (and/or the second ISP 240) includes a multi-CFA processing function for processing various CFA patterns regardless of a specific CFA pattern of the camera, the image processing device 120 may generate an image suitable for a specific situation by processing the raw image signal generated by the image signal generating device 110 regardless of the CFA pattern of the camera.

The merge circuit 250 may obtain the first partial image from the first ISP 230, may obtain the second partial image from the second ISP 240, and may generate a first image corresponding to the first raw image signal based on the first partial image and the second partial image. When there is no need to merge the partial images, the merge circuit 250 may be bypassed.

According to an embodiment, the merge circuit 250 may determine a pixel value of the first image to be a value of a pixel determined from the first partial image or the second partial image for a region in which the first partial image does not overlap the second partial image. For a blending region in which a portion of the first partial image overlaps a portion of the second partial image, the merge circuit 250 may determine the pixel value of the first image by a weighted sum of a pixel value determined from the portion of the first partial image and a pixel value determined from the portion of the second partial image.

The output interface 260 may be connected to other external devices to transmit and receive data. For example, the output interface 260 may be connected to a display. For example, the output interface 260 may be connected to an additional processor, such as an engine control unit (ECU) or vehicle control unit (VCU) of a vehicle. For example, the ECU or VCU may perform a function of an advanced driver assistance system (ADAS) by using the received first image. According to an embodiment, the output interface 260 may include a plurality of output terminals connected to a plurality of other external devices.

The output interface 260 may be implemented as circuitry in the image processing device 120. For example, the output interface 260 may include an internal bus and an external bus. In another example, the output interface 260 may be a component for connecting the image processing device 120 to an external device.

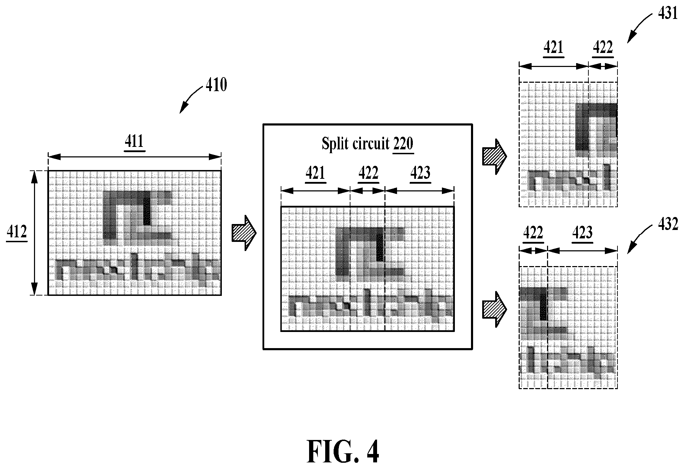

FIG. 3 is a flowchart of an image signal processing method, according to an embodiment, and FIG. 4 illustrates operations of a split circuit, according to an embodiment.

Operations 310 to 340 may be performed by an image processing device (e.g., the image processing device 120 of FIGS. 1 and 2). The image processing device may include an input interface (e.g., the input interface 210 of FIG. 2), a split circuit (e.g., the split circuit 220 of FIG. 2), a first ISP (e.g., the first ISP 230 of FIG. 2), a second ISP (e.g., the second ISP 240 of FIG. 2), a merge circuit (e.g., the merge circuit 250 of FIG. 2), and an output interface (e.g., the output interface 260 of FIG. 2).

In operation 310, the split circuit may receive a first raw image signal, which is at least a portion of an image signal captured by an image sensor of a first camera. For example, the split circuit may receive the first raw image signal via the interface.

In operation 320, the split circuit may determine a first region, a second region, and a blending region for the first raw image signal. Of a region 410 represented by the first raw image signal, a first region 431 may be a region to be transmitted to the first ISP. Of the region 410 represented by the first raw image signal, a second region 432 may be a region to be transmitted to the second ISP. The blending region may be an overlapping (or repeated) region between the first region and the second region.

The split circuit may determine the sizes of the first region 431 and the second region 432 by considering the size of the raw image signal that each ISP may process in real time.

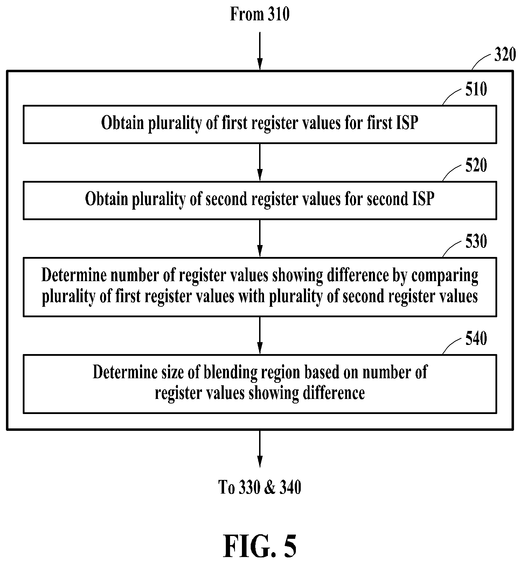

The method of determining the blending region for the first raw image signal by the split circuit is further described below with reference to FIGS. 5 to 7.

According to an embodiment, the size of the blending region for the first raw image signal may be different from the size of a previous blending region for a previous raw image signal. For example, when the raw image signal is a t frame, the previous raw image signal may be a t-1 frame. The size of the blending region for the first raw image signal may be independently determined for each frame represented by the first raw image signal.

For example, for a first frame, the size of the blending region may be determined to be a first size, and for a second frame, the size of the blending region may be determined to be a second size. The first size may be the same as or different from the second size.

In operation 330, of the first raw image signal, the split circuit may transmit, to the first ISP, a first partial raw image signal corresponding to the first region 431 including the blending region. The first ISP may generate a first partial image by processing the first partial raw image signal.

In operation 340, of a second raw image signal, the split circuit may transmit, to the second ISP, a second partial raw image signal corresponding to the second region 432 including the blending region. The second ISP may generate a second partial image by processing the second partial raw image signal.

According to an embodiment, the image processing device may further include a third ISP that generates a third partial image signal by processing a third partial raw image signal. When the image processing device further includes the third ISP, the split circuit may transmit, to the third ISP, the third partial raw image signal corresponding to a third region of the first raw image signal. For example, the third region may be determined to include at least a portion of the blending region. For example, the third region may be determined to share the blending region with the first region or the second region. For example, the third region may be determined not to include the blending region. Even when the image processing device includes four or more ISPs, the operation of the split circuit 220 may be similarly modified.

As shown in FIG. 4, the region 410 represented by the first raw image signal may have a first lateral length 411 and a second vertical length 412. When the first raw image signal is input to the split circuit, the split circuit may determine a first partial lateral length 421, a second partial lateral length 422, and a third partial lateral length 423. The first region 431 may be a region corresponding to the first partial lateral length 421 and the second partial lateral length 422 in the region 410 represented by the first raw image signal. The second region 432 may be a region corresponding to the second partial lateral length 422 and the third partial lateral length 423 in the region 410 represented by the first raw image signal. The blending region may be a region corresponding to the second partial lateral length 422 in the region 410 represented by the first raw image signal. The blending region may be included in both the first region 431 and the second region 432.

The total lateral length of the first region 431 including the first partial lateral length 421 and the second partial lateral length 422 may vary depending on the data processing capability of the first ISP. For example, when the resolution of the first raw image signal is 3840 x 2160 (in other words, ultra high definition (UHD) or 4K) and the data processing capability of the first ISP is 2560 x 1440 (in other words, Quad HD), a portion of the first raw image signal may be determined as the first partial raw image signal in accordance with the data processing capability of the first ISP.

By using the image signal processing method, the image processing device may process the first raw image signal that exceeds the size that a single ISP may process in real time by segmenting the first raw image signal into the first partial raw image signal and the second partial raw image signal and transmitting the segmented first and second partial raw image signals to the first ISP and the second ISP, respectively.

FIG. 5 is a flowchart of an image signal processing method for determining the size of a blending region based on the number of register values having differences between a first ISP and a second ISP, according to an embodiment.

According to an embodiment, operations 510 to 540 may be performed by an image processing device (e.g., the image processing device 120 of FIGS. 1 and 2). The image processing device may include an input interface (e.g., the input interface 210 of FIG. 2), a split circuit (e.g., the split circuit 220 of FIG. 2), a first ISP (e.g., the first ISP 230 of FIG. 2), a second ISP (e.g., the second ISP 240 of FIG. 2), a merge circuit (e.g., the merge circuit 250 of FIG. 2), and an output interface (e.g., the output interface 260 of FIG. 2). For example, operation 320 described above with reference to FIG. 3 may include operations 510 to 540.

Various parameter values may be set to the ISP to generate an optimized image by processing the raw image signal. The various parameter values may be respectively stored in (or set to) a plurality of registers included in the ISP. For example, the ISP may include registers storing values corresponding to an exposure time, a gain, and international organization for standardization (ISO) settings related to exposure information of the image, respectively. For example, the ISP may include registers corresponding to a red gain, a green gain, and a blue gain related to white balance information of the image, respectively. For example, the ISP may include registers corresponding to a color correction matrix (e.g., nine registers are required for a 3x3 matrix), hue adjustment, and saturation adjustment related to color correction information of the image, respectively.

When the register values for the first ISP are different from the register values for the second ISP, the first partial image and the second partial image may be generated by different parameters, and thus, a boundary region between a portion displaying the first partial image and a portion displaying the second partial image may appear unnatural. The image processing device may naturally synthesize the first partial image and the second partial image by setting the blending region to the boundary region, which may appear unnatural, between the first partial image and the second partial image. The size of the blending region may be determined based on first register values for the first ISP and second register values for the second ISP.

In operation 510, the split circuit may obtain the first register values for the first ISP.

In operation 520, the split circuit may obtain the second register values for the second ISP.

In operation 530, the split circuit may determine the number of register values showing a difference by comparing the first register values with the second register values.

In operation 540, the split circuit may determine the size of the blending region based on the number of register values showing the difference. For example, as the number of register values showing the difference increases, the blending region may expand. For example, the size of the blending region may be calculated by Equation 1 below.

[Equation 1]

$$A = \frac{D}{T} \times M$$

A may be the size of the blending region, D may be the number of register values showing the difference, T may be the total number of register values, and M may be the maximum size of the blending region.

According to an embodiment, the split circuit may set a weight by considering the importance of parameters stored in the register in image generation and may set the size of the blending region by considering the number of register values showing the difference and the weight. For example, when the registers included in the ISP are classified into multiple groups according to importance, a weight of a is assigned to registers of a first group having high importance in image generation, and a weight of b is assigned to registers of a second group having low importance in image generation, the size of the blending region may be calculated by Equation 2 below.

[Equation 2]

$$A = \frac{a \times D_1 + b \times D_2}{(a+b) \times T} \times M$$

A may be the size of the blending region, $D_1$ may be the number of register values showing the difference among the registers of the first group having high importance in image generation, $D_2$ may be the number of register values showing the difference among the registers of the second group having low importance in image generation, T may be the total number of register values, and M may be the maximum size of the blending region.

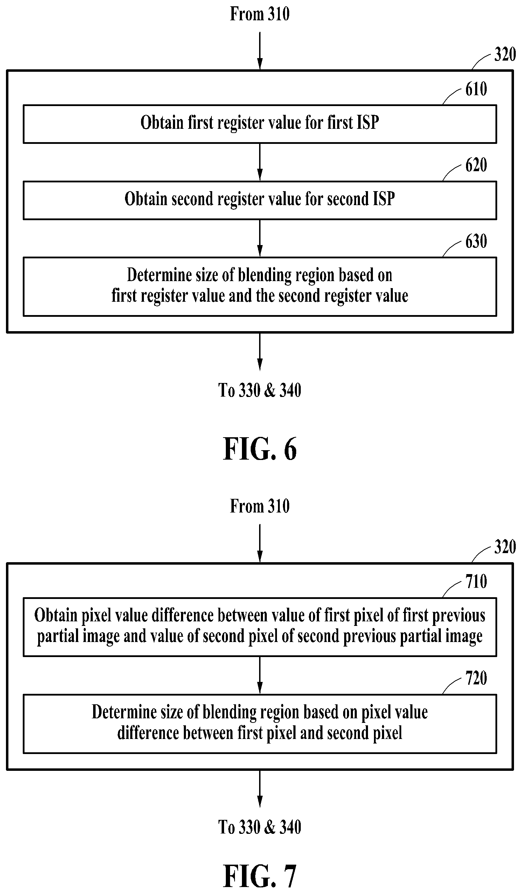

FIG. 6 is a flowchart of an image signal processing method for determining a size of a blending region based on a first register value of a first ISP and a second register value of a second ISP, according to an embodiment.

According to an embodiment, operations 610 to 630 may be performed by an image processing device (e.g., the image processing device 120 of FIGS. 1 and 2). The image processing device may include an input interface (e.g., the input interface 210 of FIG. 2), a split circuit (e.g., the split circuit 220 of FIG. 2), a first ISP (e.g., the first ISP 230 of FIG. 2), a second ISP (e.g., the second ISP 240 of FIG. 2), a merge circuit (e.g., the merge circuit 250 of FIG. 2), and an output interface (e.g., the output interface 260 of FIG. 2). For example, operation 320 described above with reference to FIG. 3 may include operations 610 to 630.

According to an embodiment, the size of the blending region may be determined based on at least one first register value for the first ISP and at least one second register value for the second ISP.

In operation 610, the split circuit may obtain the first register value for the first ISP.

In operation 620, the split circuit may obtain the second register value for the second ISP.

In operation 630, the split circuit may determine the size of the blending region based on the first register value and the second register value. For example, the first register value and the second register value may store an ISO setting value of the first ISP and an ISO setting value of the second ISP, respectively.

According to an embodiment, the split circuit may calculate the difference between the first register value and the second register value and may determine the size of the blending region based on the difference between the first register value and the second register value. For example, as the difference between the first register value and the second register value increases, the blending region may expand.

According to an embodiment, for a plurality of registers, the split circuit may calculate the difference between a value of a first register and a value of a second register and may determine the size of the blending region based on the difference between the value of the first register and the value of the second register for the plurality of registers. For example, the size of the blending region may be determined based on the difference between a value of the first register and a value of the second register for the plurality of registers corresponding to auto exposure (AE) and auto white balance (AWB).

FIG. 7 is a flowchart of an image signal processing method for determining a size of a blending region based on a difference between a first pixel value of a first previous partial image and a second pixel value of a second previous partial image, according to an embodiment.

According to an embodiment, operations 710 to 720 may be performed by an image processing device (e.g., the image processing device 120 of FIGS. 1 and 2). The image processing device may include an input interface (e.g., the input interface 210 of FIG. 2), a split circuit (e.g., the split circuit 220 of FIG. 2), a first ISP (e.g., the first ISP 230 of FIG. 2), a second ISP (e.g., the second ISP 240 of FIG. 2), a merge circuit (e.g., the merge circuit 250 of FIG. 2), and an output interface (e.g., the output interface 260 of FIG. 2). For example, operation 320 described above with reference to FIG. 3 may include operations 710 to 720.

According to an embodiment, the size of the blending region may be determined based on partial images (e.g., a first previous partial image and a second previous partial image) generated by the first ISP and the second ISP, respectively, for a previous frame (e.g., a first previous image).

In operation 710, the split circuit may obtain the difference of pixel values between a value of a first pixel of the first previous partial image and a value of a second pixel of the second previous partial image. For example, the first previous partial image and the second previous partial image may be partial images generated by the first ISP and the second ISP, respectively, for a previous raw image signal for the previous frame. The first pixel of the first previous partial image may be a pixel corresponding to the blending region in the first previous partial image. The second pixel of the second previous partial image may be a pixel corresponding to a first pixel in the second previous partial image. A pixel value difference between the first pixel and the second pixel may indicate the difference between the image generated by the first ISP and the image generated by the second ISP for the same raw image signal.

In operation 720, the split circuit may determine the size of the blending region based on the pixel value difference between the first pixel and the second pixel. For example, when the pixel value difference between the first pixel and the second pixel is great, the blending region may expand.

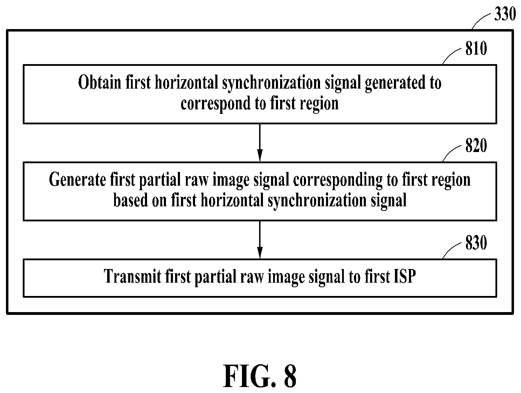

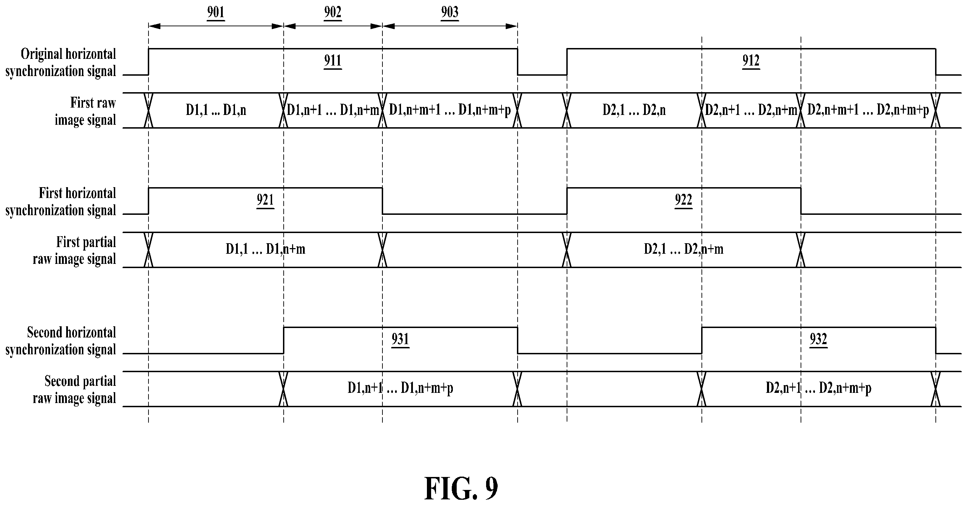

FIG. 8 is a flowchart of an image signal processing method for generating a first partial raw image signal based on a first horizontal synchronization signal, according to an embodiment, and FIG. 9 illustrates a first horizontal synchronization signal and a second horizontal synchronization signal, according to an embodiment.

According to an embodiment, operations 810 to 830 may be performed by an image processing device (e.g., the image processing device 120 of FIGS. 1 and 2). The image processing device may include an input interface (e.g., the input interface 210 of FIG. 2), a split circuit (e.g., the split circuit 220 of FIG. 2), a first ISP (e.g., the first ISP 230 of FIG. 2), a merge circuit (e.g., the merge circuit 250 of FIG. 2), and an output interface (e.g., the output interface 260 of FIG. 2). For example, operation 330 described above with reference to FIG. 3 may include operations 810 to 830.

According to an embodiment, the split circuit may receive at least one of a plurality of lines included in a first raw image signal and may transmit samples included in the at least one line to at least one of the first ISP or a second ISP. For example, the split circuit may bypass the samples included in the received at least one line through at least one of the first ISP or the second ISP. The split circuit may generate a first partial raw image signal and a second partial raw image signal based on a first horizontal synchronization signal and a second horizontal synchronization signal.

For example, the split circuit may not include memory for temporarily or non-temporarily storing the first raw image signal and may bypass the first partial raw image signal and the second partial raw image signal through the first ISP and the second ISP, respectively, in the first raw image signal based on the first horizontal synchronization signal and the second horizontal synchronization signal.

For example, the split circuit may include a line buffer for temporarily storing the at least one line of the plurality of lines included in the first raw image signal. The split circuit may generate the first partial raw image signal and the second partial raw image signal based on the first horizontal synchronization signal and the second horizontal synchronization signal.

In operation 810, the split circuit may obtain the first horizontal synchronization signal generated to correspond to a first region. For example, when the number of samples included in a line included in the first raw image signal is (n+m+p) and the number of samples included in a line included in the first region is (n+m), the first horizontal synchronization signal may be a horizontal synchronization signal of an original horizontal synchronization signal activated in a corresponding section from a first sample to an (n+m)-th sample of each line. The first horizontal synchronization signal may be generated by a phase-locked loop (PLL).

In operation 820, the split circuit may generate the first partial raw image signal corresponding to the first region based on the first horizontal synchronization signal. For example, the split circuit may generate the first partial raw image signal by bypassing at least a portion of the first raw image signal corresponding to the section in which the first horizontal synchronization signal is activated.

In operation 830, the split circuit may transmit the first partial raw image signal to the first ISP. For example, the first partial raw image signal bypassed by the split circuit may be transmitted to the first ISP.

Operations 810 to 830 may be similarly modified and applied to operation 340 of transmitting the second partial raw image signal to the second ISP described above with reference to FIG. 3.

Referring to FIG. 9, the split circuit may sequentially receive line D1 and line D2 from among a plurality of lines included in the first raw image signal. When the split circuit does not include a line buffer or memory for temporarily or non-temporarily storing information, the first partial raw image signal and the second partial raw image signal that are generated based on the received line D1 may be directly transmitted to the first ISP and the second ISP.

When the split circuit includes the line buffer, line D1 and line D2 may be stored in the line buffer. When the capacity of the line buffer is small, only line D1 may be temporarily stored in the line buffer, and after the first raw image signal and the second raw image signal for line D1 are transmitted to the first ISP and the second ISP, the line buffer may be cleared. After the line buffer is cleared, line D2 may be temporarily stored in the line buffer.

The original horizontal synchronization signal corresponding to the first raw image signal may be activated in a section 911 corresponding to line D1 and a section 912 corresponding to line D2. When each line of the first raw image signal includes (n+m+p) samples, the section 911 corresponding to line D1 of the original horizontal synchronization signal may be divided into a section 901 corresponding from the first sample to the n-th sample, a section 902 corresponding from an (n+1)-th sample to an (n+m)-th sample, and a section 903 corresponding from an (n+m+1)-th sample to an (n+m+p)-th sample. In this case, m may be the number of samples corresponding to the blending region in each line, (n+m) may be the number of samples corresponding to the first region in each line, and (n+m+p) may be the number of samples corresponding to the second region in each line.

The first horizontal synchronization signal may be activated in a section 921 corresponding from the first sample to the (n+m)-th sample of line D1 and may be activated in a section 922 corresponding from the first sample to the (n+m)-th sample of line D2. When at least a portion of the samples included in the first raw image signal corresponding to the section in which the first horizontal synchronization signal is activated is bypassed, the first partial raw image signal corresponding to the first region may be generated.

The second horizontal synchronization signal may be activated in a section 931 corresponding from the (n+m+1)-th sample to the (n+m+p)-th sample of line D1 and may be activated in a section 932 corresponding from the (n+m+1)-th sample to the (n+m+p)-th sample of line D2. When at least a portion of the samples included in the first raw image signal corresponding to the section in which the second horizontal synchronization signal is activated is bypassed, the second partial raw image signal corresponding to the second region may be generated.

When the split circuit uses the line buffer, the partial raw image signal for the raw image signal may be temporarily stored, and memory (e.g., dynamic random-access memory (DRAM)) for non-temporarily storing a large volume of data may not be required.

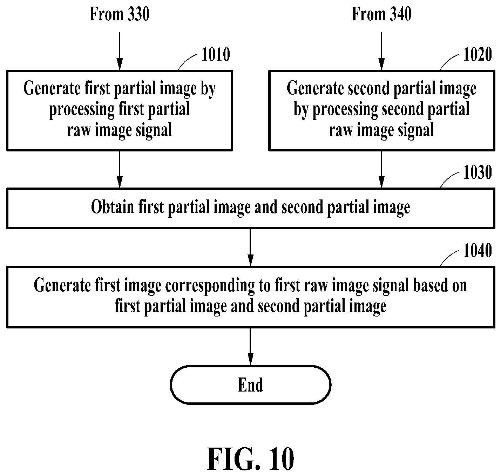

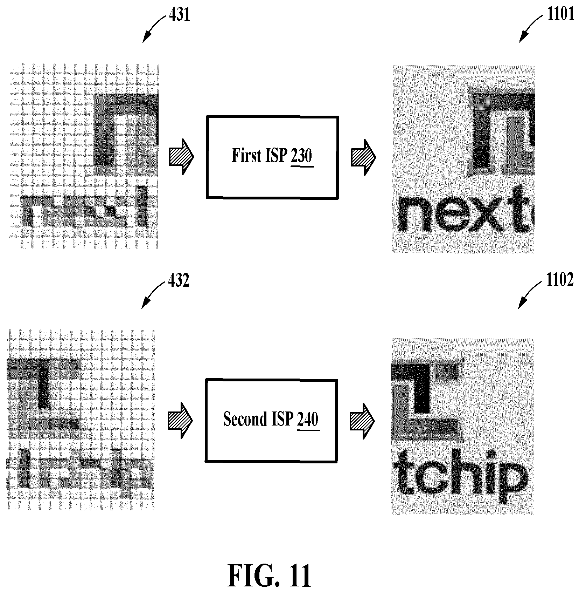

FIG. 10 is a flowchart of an image signal processing method for generating a first image based on a first partial image and a second partial image, according to an embodiment, and FIG. 11 illustrates operations of a first ISP and a second ISP, according to an embodiment.

According to an embodiment, operations 1010 to 1040 may be performed by an image processing device (e.g., the image processing device 120 of FIGS.

1 and 2). The image processing device may include an input interface (e.g., the input interface 210 of FIG. 2), a split circuit (e.g., the split circuit 220 of FIG. 2), a first ISP (e.g., the first ISP 230 of FIG. 2), a second ISP (e.g., the second ISP 240 of FIG. 2), a merge circuit (e.g., the merge circuit 250 of FIG. 2), and an output interface (e.g., the output interface 260 of FIG. 2). For example, operation 1010 may be performed after operation 330 described above with reference to FIG. 3 is performed, and operation 1020 may be performed after operation 340 described above with reference to FIG. 3 is performed.

In operation 1010, the first ISP may generate a first partial image by processing a first partial raw image signal. For example, the first ISP may generate the first partial image having a color space of RGB or YUV by processing the first partial raw image signal. The first ISP may transmit the generated first partial image to the merge circuit.

In operation 1020, the second ISP may generate a second partial image by processing the first partial raw image signal. The second ISP may transmit the generated second partial image to the merge circuit.

Referring to FIG. 4, the first ISP 230 and the second ISP 240 may generate a first partial image 1101 and a second partial image 1102 by receiving the first partial raw image signal 431 and the second partial raw image signal 432, respectively, and performing an image processing task, such as demosaicing.

In operation 1030, the merge circuit may obtain the first partial image and the second partial image.

In operation 1040, the merge circuit may generate a first image corresponding to the first raw image signal based on the first partial image and the second partial image. For example, when there is no blending region, the merge circuit may generate the first image by arranging the first partial image and the second partial image to correspond to a position of a first region and a position of a second region. For example, when there is a blending region, the merge circuit may generate the first image by arranging the first partial image and the second partial image to correspond to the position of the first region and the position of the second region and determining a value of a pixel of the blending region based on a value of a pixel corresponding to the blending region in the first partial image and a value of a pixel corresponding to the blending region in the second partial image.

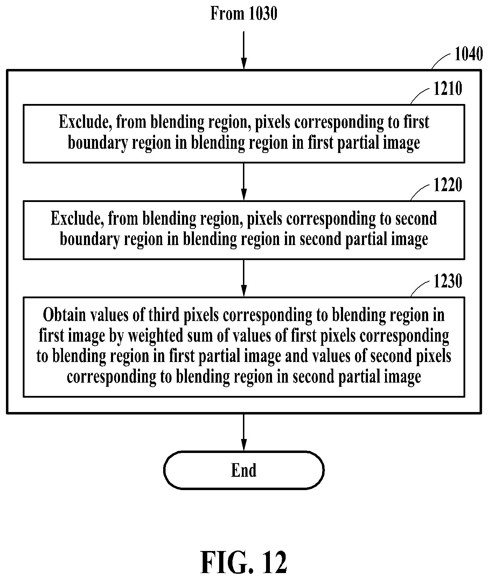

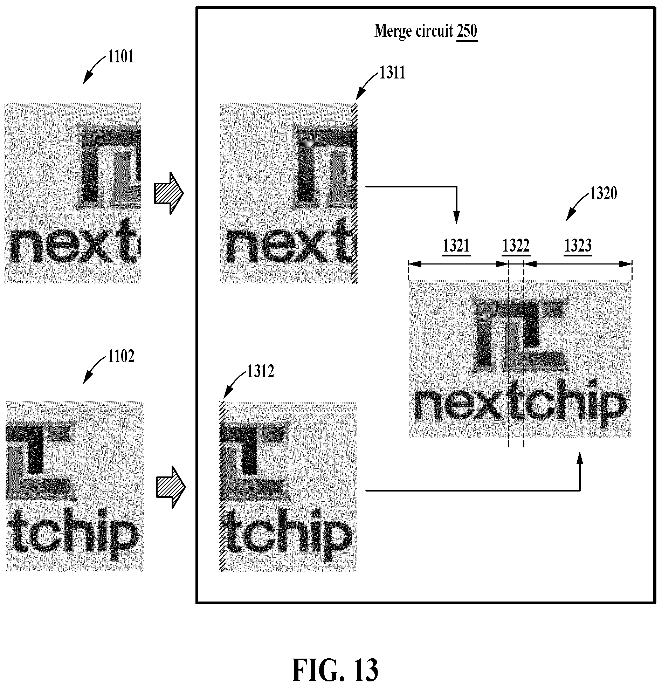

The method of performing operation 1040 by the merge circuit is further described below with reference to FIGS. 12 and 13.

FIG. 12 is a flowchart of a method of obtaining values of pixels corresponding to a blending region in a first image, according to an embodiment, and FIG. 13 illustrates operations of a merge circuit, according to an embodiment.

According to an embodiment, operations 1210 to 1230 may be performed by an image processing device (e.g., the image processing device 120 of FIGS.

1 and 2). The image processing device may include an input interface (e.g., the input interface 210 of FIG. 2), a split circuit (e.g., the split circuit 220 of FIG. 2), a first ISP (e.g., the first ISP 230 of FIG. 2), a second ISP (e.g., the second ISP 240 of FIG. 2), a merge circuit (e.g., the merge circuit 250 of FIG. 2), and an output interface (e.g., the output interface 260 of FIG. 2). For example, operation 1040 described above with reference to FIG. 10 may include operations 1210 to 1230.

The merge circuit 250 may obtain the first partial image 1101 and the second partial image 1102 and may generate a first image 1320 corresponding to a first raw image signal based on the first partial image 1101 and the second partial image 1102.

In operation 1210, the merge circuit 250 may exclude, from a blending region, pixels corresponding to a first boundary region 1311 in the blending region in the first partial image 1101. The first boundary region 1311 may be a region corresponding to a determined number of pixels at an end of the blending region in the first partial image 1101. For example, the first boundary region 1311 may be a region corresponding to 16 pixels in the lateral direction at the end of the blending region.

In operation 1220, the merge circuit 250 may exclude, from the blending region, pixels corresponding to a second boundary region 1312 in the blending region in the second partial image 1102. The second boundary region 1312 may be a region corresponding to a determined number of pixels at an end of the blending region in the second partial image 1102. For example, the second boundary region 1312 may be a region corresponding to 16 pixels in the lateral direction at the end of the blending region.

When the partial image is generated by the first ISP and the second ISP based on the partial raw image signal, values of samples of points adjacent to a first point of the partial image may be reflected in a value of a pixel related to the first point. When an image is generated for a boundary region in the blending region in the partial image, as some values of samples related to points adjacent to the boundary region are lost while generating the partial raw image signal, an incorrect image may be generated in the boundary region. As pixels corresponding to the first boundary region 1311 and the second boundary region 1312 are removed from the first partial image 1101 and the second partial image 1102, values of incorrect pixels may be excluded from the first image.

In operation 1230, the merge circuit 250 may obtain values of third pixels corresponding to the blending region in the first image by a weighted sum of values of first pixels corresponding to the blending region in the first partial image and values of second pixels corresponding to the blending region in the second partial image. For example, each of the values of the third pixels may be an average of the value of the first pixel and the value of the second pixel corresponding to the position of each third pixel.

According to an embodiment, the merge circuit 250 may differently assign a first weight to the values of the first pixel and a second weight to the values of the second pixel. For example, the first weight and the second weight may be determined based on a first register value of the first ISP and a second register value of the second ISP, respectively.

According to an embodiment, the merge circuit 250 may store a first line of the first partial image and a second line of the second partial image by using the line buffer and may generate a third line of the first image based on the first line and the second line. When the merge circuit 250 uses the line buffer, the generated image may be temporarily stored and memory for non-temporarily storing a large volume of data may not be required.

According to an embodiment, when the merge circuit 250 uses the line buffer, the merge circuit 250 may obtain the values of the third pixels of the third line by a weighted sum of the values of the first pixels of the first line and the values of the second pixels of the second line. As the line buffer performs a weighted sum of the first pixel and the second pixel corresponding to each other in the first line and the second line, the operation of the merge circuit 250 may be rapidly performed.

Referring to FIG. 13, the merge circuit 250 may generate the first image 1320 based on the first partial image 1101 and the second partial image 1102. The merge circuit 250 may remove the first boundary region 1311 the second boundary region 1312 from the first partial image 1101 and the second partial image 1102, respectively. The merge circuit may generate the first image 1320 based on the first partial image 1101 from which the first boundary region 1311 is removed and the second partial image 1102 from which the second boundary region 1312 is removed. Values of pixels of a first image region 1321 which exists only in the first partial image 1101 among regions of the first image 1320 may be determined to be values of pixels of the first partial image 1101. Values of pixels of a second image region 1322 corresponding a blending region which exists both in the first partial image 1101 and the second partial image 1102 among regions of the first image 1320 may be determined by a weighted sum of values of pixels of the first partial image 1101 and values of pixels of the second partial image 1102. Values of pixels of a third image region 1323 which exists only in the second partial image 1102 among regions of the first image 1320 may be determined to be the values of the pixels of the second partial image 1102.

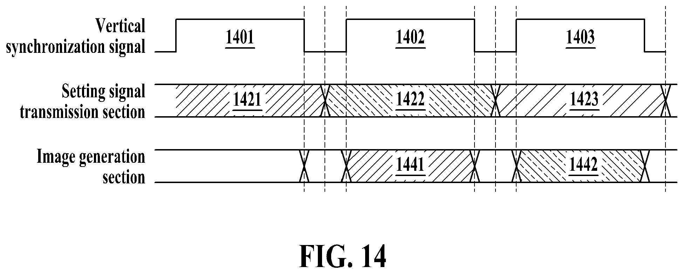

FIG. 14 illustrates a vertical synchronization signal and a setting signal transmission section, according to an embodiment.

Each of a plurality of ISPs of an image processing device may receive a setting signal for image generation. Each of the ISPs may need to generate a partial image based on the same setting signal to generate a natural image based on partial images generated by the ISPs.

According to an embodiment, the first ISP may detect a setting signal in a section corresponding to a first frame and may generate a first partial image corresponding to the setting signal in a section corresponding to a second frame. The second ISP may detect the setting signal in the section corresponding to the first frame and may generate a second partial image corresponding to the setting signal in the section corresponding to the second frame. The image processing device may distinguish, for each frame, a section in which the setting signal is transmitted to the ISP from a section in which an image is generated by reflecting the setting signal in the ISP to prevent generation of images by different setting signals for each line in the same frame or generation of a region generated by the first ISP and a region generated by the second ISP by different setting signals in the same frame.

Referring to FIG. 14, a vertical synchronization signal may be activated in a section 1401 corresponding to a first frame of a raw image signal, a section 1402 corresponding to a second frame, and a section 1403 corresponding to a third frame. The ISP of the image processing device may apply a setting signal 1421 received from the section 1401 corresponding to the first frame to an image generation section 1441 corresponding to the second frame, based on the vertical synchronization signal. The ISP of the image processing device may apply a setting signal 1422 received from the section 1402 corresponding to the second frame to an image generation section 1442 corresponding to the third frame, based on the vertical synchronization signal.

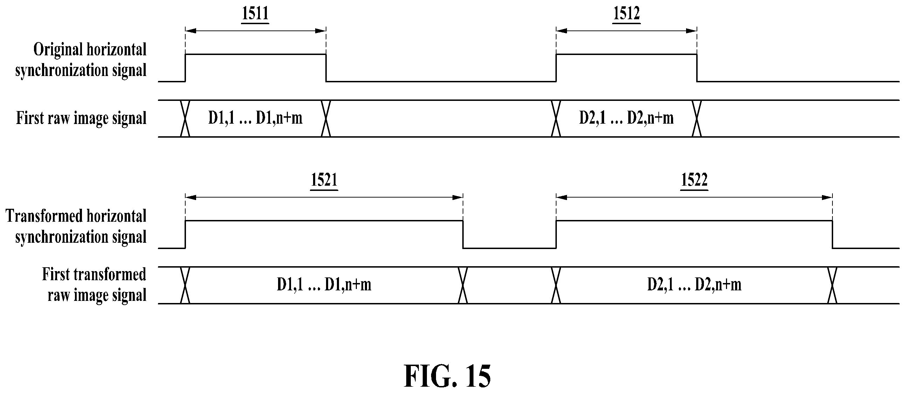

FIG. 15 illustrates a transformed horizontal synchronization signal and a first transformed raw image signal, according to an embodiment.

The image processing device may change a clock frequency at which the ISP operates, depending on the situation. For example, the image processing device may lower the clock frequency of the ISP in a low power mode. When the clock frequency is changed, the image processing device may generate a transformed horizontal synchronization signal in which an active section is changed to transmit the same volume of data.

According to an embodiment, the image processing device may receive an original horizontal synchronization signal, a first raw image signal, and a clock signal through dualport synchronous RAM (DPSRAM) and may change the clock frequency of the ISP by outputting the transformed horizontal synchronization signal, a first transformed raw image signal, and a transformed clock signal.

The embodiment shown in FIG. 15 may correspond to a situation in which the image processing device lowers the clock frequency at which the ISP operates. The original horizontal synchronization signal may be activated in a section 1511 corresponding to line D1 of the first raw image signal and a section 1512 corresponding to line D2 of the first raw image signal. The transformed horizontal synchronization signal may be activated in a section 1521 corresponding to line D1 of the first transformed raw image signal and a section 1522 corresponding to line D2 of the first transformed raw image signal. To include the same volume of data in the first transformed raw image signal as the first raw image signal, the section 1521 corresponding to line D1 of the first transformed raw image signal and the section 1522 corresponding to line D2 of the first transformed raw image signal may be determined to be longer than the section 1511 corresponding to line D1 of the first raw image signal and the section 1512 corresponding to line D2 of the first raw image signal, respectively.

The methods according to the embodiments described herein may be recorded in non-transitory computer-readable media including program instructions to implement various operations of the embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher-level code that may be executed by the computer using an interpreter. The above-described devices may be configured to act as one or more software modules in order to perform the operations of the above-described embodiments, or vice versa.

The software may include a computer program, a piece of code, an instruction, or some combination thereof, to independently or uniformly instruct or configure the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over networkcoupled computer systems so that the software is stored and executed in a distributed fashion. The software and data may be stored by one or more non-transitory computer-readable recording mediums.

As described above, although the embodiments have been described with reference to the limited drawings, a person skilled in the art may apply various technical modifications and variations based thereon. For example, suitable results may be achieved if the described techniques are performed in a different order and/or if components in a described system, architecture, device, or circuit are combined in a different manner and/or replaced or supplemented by other components or their equivalents.

Accordingly, other implementations are within the scope of the following claims.

## Claims

1. A method, performed by an image processing device, of processing an image signal, the method comprising:

   receiving, by a split circuit, a first raw image signal, which is at least a portion of an image signal captured by an image sensor of a first camera;
   determining, by the split circuit, a blending region for the first raw image signal;
   transmitting, from the split circuit, a first partial raw image signal of the first raw image signal corresponding to a first region including the blending region to a first image signal processor (ISP); and
   transmitting, from the split circuit, a second partial raw image signal of the first raw image signal corresponding to a second region including the blending region to a second ISP,
   wherein the first partial raw image signal is processed by the first ISP, and
   the second partial raw image signal is processed by the second ISP.

2. The method of claim 1, wherein the determining of the blending region for the first raw image signal comprises:

   obtaining a plurality of first register values for the first ISP;
   obtaining a plurality of second register values for the second ISP;
   determining a number of register values showing a difference by comparing the plurality of first register values with the plurality of second register values; and
   determining a size of the blending region based on the number of register values showing the difference.

3. The method of claim 1, wherein the determining of the blending region for the first raw image signal comprises:

   obtaining a first register value for the first ISP;
   obtaining a second register value for the second ISP; and
   determining a size of the blending region based on the first register value and the second register value.

4. The method of claim 3, wherein the determining of the size of the blending region based on the first register value and the second register value comprises:

   calculating a difference between the first register value and the second register value; and
   determining the size of the blending region based on the difference.

5. The method of claim 1, wherein the determining of the blending region for the first raw image signal comprises:

   obtaining a pixel value difference between a value of a first pixel of a first previous partial image corresponding to a first previous partial raw image signal processed by the first ISP and a value of a second pixel of a second previous partial image corresponding to a second previous partial raw image signal processed by the second ISP; and
   determining the size of the blending region based on the pixel value difference between the first pixel and the second pixel.

6. The method of claim 1, wherein the transmitting of the first partial raw image signal of the first raw image signal corresponding to the first region including the blending region to the first ISP comprises:

   obtaining a first horizontal synchronization signal generated to correspond to the first region;
   generating the first partial raw image signal corresponding to the first region based on the first horizontal synchronization signal; and
   transmitting the first partial raw image signal to the first ISP.

7. The method of claim 1, wherein a size of the blending region for the first raw image signal is different from a size of a previous blending region for a previous raw image signal.

8. The method of claim 1, further comprising:

   generating a first partial image by processing the first partial raw image signal by the first ISP; and
   generating a second partial image by processing the second partial raw image signal by the second ISP.

9. The method of claim 8, further comprising:

   obtaining, by a merge circuit, the first partial image and the second partial image; and

generating, by the merge circuit, a first image corresponding to the first raw image signal based on the first partial image and the second partial image.

10. The method of claim 9, wherein the generating, by the merge circuit, of the first image corresponding to the first raw image signal comprises obtaining values of third pixels corresponding to the blending region in the first image by a weighted sum of values of first pixels corresponding to the blending region in the first partial image and values of second pixels corresponding to the blending region in the second partial image.

11. The method of claim 10, wherein the generating, by the merge circuit, of the first image corresponding to the first raw image signal further comprises:

excluding pixels corresponding to a first boundary region in the blending region from the blending region in the first partial image; and
excluding pixels corresponding to a second boundary region in the blending region from the blending region in the second partial image.

12. A non-transitory computer-readable storage medium storing instructions that, when executed by a processor, cause the processor to perform the method of claim 1.

13. An image processing device comprising:

a split circuit configured to receive a first raw image signal, which is at least a portion of an image signal captured by an image sensor of a first camera;
a first image signal processor (ISP) configured to generate a first partial image by processing a first partial raw image signal of the first raw image signal; and
a second ISP configured to generate a second partial image by processing a second partial raw image signal of the first raw image signal,
wherein the split circuit is further configured to:

determine a blending region for the first raw image signal,
transmit, to the first ISP, the first partial raw image signal of the first raw image signal corresponding to a first region including the blending region, and
transmit, to the second ISP, the second partial raw image signal of the first raw image signal corresponding to a second region including the blending region.

14. The image processing device of claim 13, wherein the split circuit is further configured to bypass each sample included in at least one of a plurality of lines included in the first raw image signal through at least one of the first ISP or the second ISP, based on a received horizontal synchronization signal.

15. The image processing device of claim 13, further comprising:

a merge circuit configured to generate a first image corresponding to the first raw image signal based on the first partial image and the second partial image
wherein the merge circuit is further configured to:

store a first line of the first partial image and a second line of the second partial image by using a line buffer, and
generate a third line of the first image based on the first line and the second line.

Image signal generating device **110** — Image processing device **120**

## FIG. 1

120

Input interface **210** → Split circuit **220** → First ISP **230** → Merge circuit **250** → Output interface **260**

Split circuit **220** → Second ISP **240** → Merge circuit **250**

## FIG. 2

```
                    ┌─────────────────┐
                    │      Start      │
                    └────────┬────────┘
                             │                          ╭─ 310
            ┌────────────────▼─────────────────────────────┐
            │   Receive first raw image signal, which is at least portion of   │
            │   image signal captured by image sensor of first camera          │
            └────────────────┬─────────────────────────────┘
                             │                          ╭─ 320
            ┌────────────────▼─────────────────────────────┐
            │      Determine blending region for first raw image signal        │
            └──────┬──────────────────────────────┬────────┘
                   │          ╭─ 330               │          ╭─ 340
        ┌──────────▼──────────┐          ┌─────────▼───────────┐
        │  Transmit, to first ISP, first  │          │  Transmit, to second ISP, second │
        │  partial raw image signal of     │          │  partial raw image signal of first raw │
        │  first raw image signal          │          │  image signal corresponding to second │
        │  corresponding to first region   │          │  region including blending region │
        │  including blending region       │          │                     │
        └──────────┬──────────┘          └─────────┬───────────┘
                   │                               │
                   └───────────────┬───────────────┘
                                   │
                         ┌─────────▼─────────┐
                         │        End        │
                         └───────────────────┘
```

# FIG. 3

16

FIG. 4

From 310

320

510

Obtain plurality of first register values for first ISP

520

Obtain plurality of second register values for second ISP

530

Determine number of register values showing difference by comparing plurality of first register values with plurality of second register values

540

Determine size of blending region based on number of register values showing difference

To 330 & 340

# FIG. 5

From 310

320

610

Obtain first register value for first ISP

620

Obtain second register value for second ISP

630

Determine size of blending region based on
first register value and the second register value

To 330 & 340

# FIG. 6

From 310

320

710

Obtain pixel value difference between value of first pixel of first previous
partial image and value of second pixel of second previous partial image

720

Determine size of blending region based on pixel value
difference between first pixel and second pixel

To 330 & 340

# FIG. 7

330

810

Obtain first horizontal synchronization signal generated to correspond to first region

820

Generate first partial raw image signal corresponding to first region based on first horizontal synchronization signal

830

Transmit first partial raw image signal to first ISP

# FIG. 8

EP 4 664 390 A1

901    902    903

Original horizontal
synchronization signal

911

912

First raw
image signal

D1,1 ... D1,n    D1,n+1 ... D1,n+m    D1,n+m+1 ... D1,n+m+p    D2,1 ... D2,n    D2,n+1 ... D2,n+m    D2,n+m+1 ... D2,n+m+p

First horizontal
synchronization signal

921

922

First partial
raw image signal

D1,1 ... D1,n+m    D2,1 ... D2,n+m

Second horizontal
synchronization signal

931

932

Second partial
raw image signal

D1,n+1 ... D1,n+m+p    D2,n+1 ... D2,n+m+p

FIG. 9

EP 4 664 390 A1

From 330                From 340

1010

Generate first partial image by processing first partial raw image signal

1020

Generate second partial image by processing second partial raw image signal

1030

Obtain first partial image and second partial image

1040

Generate first image corresponding to first raw image signal based on first partial image and second partial image

End

**FIG. 10**

22

431

1101

First ISP 230

432

1102

Second ISP 240

**FIG. 11**

From 1030

1040

1210

Exclude, from blending region, pixels corresponding to first boundary region in blending region in first partial image

1220

Exclude, from blending region, pixels corresponding to second boundary region in blending region in second partial image

1230

Obtain values of third pixels corresponding to blending region in first image by weighted sum of values of first pixels corresponding to blending region in first partial image and values of second pixels corresponding to blending region in second partial image

End

**FIG. 12**

FIG. 13

**FIG. 14**

Original horizontal synchronization signal

1511

1512

First raw image signal

D1,1 ... D1,n+m

D2,1 ... D2,n+m

Transformed horizontal synchronization signal

1521

1522

First transformed raw image signal

D1,1 ... D1,n+m

D2,1 ... D2,n+m

## FIG. 15

Europäisches
Patentamt

European
Patent Office

Office européen
des brevets

# EUROPEAN SEARCH REPORT

**Application Number**

EP 25 18 1800

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/244875 A1 (LEE YONGGU [KR] ET AL) 30 July 2020 (2020-07-30) | 1,6-8, 12-15 | INV. G06T1/20 |
| Y | * abstract * | 9-11 | G06T3/4038 |
| A | * paragraphs [0001] - [0009], [0071], [0084] - [0142] * | 2-5 | |
| | ----- | | |
| X | US 2015/042845 A1 (ZHAO GUANGYAO [CN]) 12 February 2015 (2015-02-12) | 1,7,8, 12,13 | |
| Y | * abstract * * paragraphs [0007] - [0027], [0041] * | 9-11 | |
| | ----- | | |
| Y | US 2009/324128 A1 (KUBE MATTHIAS [DE] ET AL) 31 December 2009 (2009-12-31) * abstract * * paragraphs [0009] - [0015], [0034] - [0038] * | 9-11 | |
| | ----- | | |

**TECHNICAL FIELDS SEARCHED (IPC)**

G06T

The present search report has been drawn up for all claims

| Place of search | Date of completion of the search | Examiner |
|---|---|---|
| Munich | 29 October 2025 | Zamuner, Umberto |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 18 1800

This annex lists the patent family members relating to the patent documents cited in the above-mentioned European search report.
The members are as contained in the European Patent Office EDP file on
The European Patent Office is in no way liable for these particulars which are merely given for the purpose of information.

29-10-2025

| Patent document cited in search report | | Publication date | Patent family member(s) | | Publication date |
|---|---|---|---|---|---|
| US 2020244875 | A1 | 30-07-2020 | KR 20200094500 A | | 07-08-2020 |
| | | | US 2020244875 A1 | | 30-07-2020 |
| | | | WO 2020159262 A1 | | 06-08-2020 |
| US 2015042845 | A1 | 12-02-2015 | CN 102665031 A | | 12-09-2012 |
| | | | US 2015042845 A1 | | 12-02-2015 |
| | | | WO 2013159587 A1 | | 31-10-2013 |
| US 2009324128 | A1 | 31-12-2009 | DE 102006039389 A1 | | 28-02-2008 |
| | | | EP 2054853 A2 | | 06-05-2009 |
| | | | US 2009324128 A1 | | 31-12-2009 |
| | | | WO 2008022780 A2 | | 28-02-2008 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240075634
- KR 1020240109447